# EUROPEAN PATENT APPLICATION

(11) **EP 4 847 921 A1**
(43) Date of publication of application: **02.12.2026**
(21) Application number: 26179757.5
(22) Date of filing: 20.05.2026
(51) Int. Cl.: G01N 35/04, B65G 47/244, G01C 9/06

(54) **SPECIMEN PROCESSING APPARATUS**

(30) Priority: 29.05.2025 JP 2025090135
(71) Applicant: Aoi Seiki Co., Ltd., Higashi-ku Kumamoto-shi, Kumamoto-ken Kumamoto 861-8038 (JP)
(72) Inventor: ITOH, Teruaki, Kumamoto-ken, 861-8038 (JP)
(74) Representative: AWA Sweden AB

(57) **Abstract**

A specimen processing apparatus, includes; a conveyor that conveys a specimen in a recumbent state; a detection apparatus including an inclination sensor that detects an outer shape of a specimen; a feeder that feeds a specimen to a feed point; an uprighting apparatus that rotates and raises the specimen in a rotation direction based on a detection result of an outer shape of the specimen; a first regulating unit that is disposed between the detecting position and the feed point and regulates conveyance of the specimen; and a controlling section that feeds a next specimen to the feed point by the feeder in a case where passing of the specimen is detected between the feed point and the detecting position.

## Description

### FIELD

The present invention relates generally to a specimen processing apparatus.

### BACKGROUND

For example, in specimen processing such as testing and analyzing of a specimen such as blood and serum, a specimen container is held on a holder in an upright state and conveyed, and various processing is performed by various detection apparatuses installed in a conveyance path (see, for example, Japanese Patent Application No. 2014-233954).

For example, various processing such as supplying the specimen containers one by one to a predetermined conveyance path in a recumbent state by a lifting mechanism or the like in a housing portion that randomly houses the specimen containers, detecting the orientation of the specimen containers on the conveyance path, and turning the specimen containers in a predetermined rotation direction to bring the specimen containers into an upright state is sequentially performed. In such a specimen processing apparatus, in a case where a plurality of processing are sequentially performed on a large number of specimen containers, it is desired to increase the processing speed to increase the processing efficiency.

According to one embodiment of the present invention, the processing efficiency can be improved in the specimen processing apparatus that performs a plurality of processing.

### SUMMARY

According to an aspect of the present invention, a specimen processing apparatus, comprises; a conveyor that conveys a specimen in a recumbent state along a predetermined conveyance path; a detection apparatus including an inclination sensor that detects an outer shape of a specimen disposed at a detecting position of the conveyance path; a feeder that feeds a specimen to a feed point on an upstream side of the detecting position in the conveyance path; an uprighting apparatus that rotates and raises the specimen in a rotation direction based on a detection result of an outer shape of the specimen on a downstream side of the detecting position in the conveyance path; a first regulating unit that is disposed between the detecting position and the feed point and regulates conveyance of the specimen; and a controlling section that feeds a next specimen to the feed point by the feeder in a case where passing of the specimen is detected between the feed point and the detecting position.

### BRIEF DESCRIPTION OF DRAWINGS

FIG. 1 is a perspective view of a specimen processing apparatus according to a first embodiment of the present invention.
FIG. 2 is a plan view of the specimen processing apparatus according to the embodiment.
FIG. 3 is a front view of the specimen processing apparatus according to the embodiment.
FIG. 4 is a side view of a feeder of the specimen processing apparatus.
FIG. 5 is a plan view showing a configuration of a part of the specimen processing apparatus.
FIG. 6 is a side view of a stopper mechanism of the specimen processing apparatus.
FIG. 7 is a perspective view of a push-out mechanism of the specimen processing apparatus.
FIG. 8 is an explanatory diagram of detection processing according to the embodiment.
FIG. 9 is an explanatory diagram of detection processing according to the embodiment.
FIG. 10 is a side view of an uprighting apparatus of the specimen processing apparatus.
FIG. 11 is a plan view showing a part of the uprighting apparatus according to the embodiment.

### DETAILED DESCRIPTION

### First Embodiment

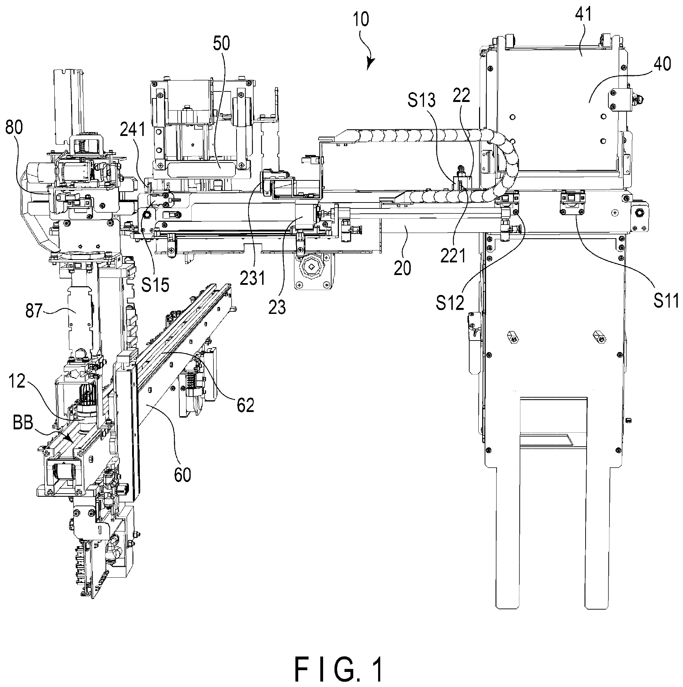

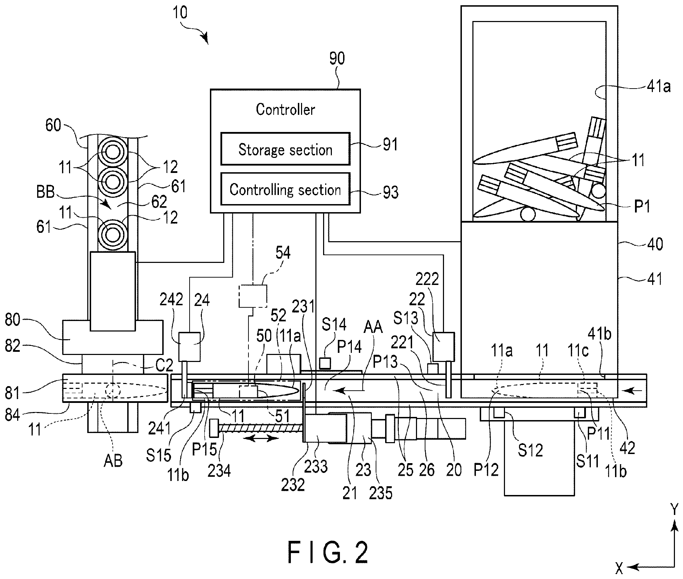

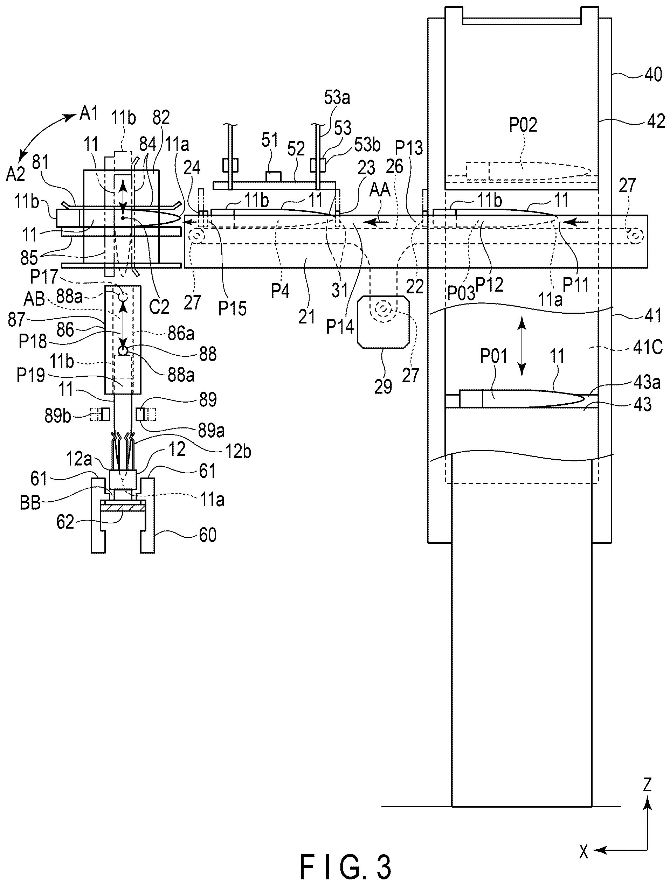

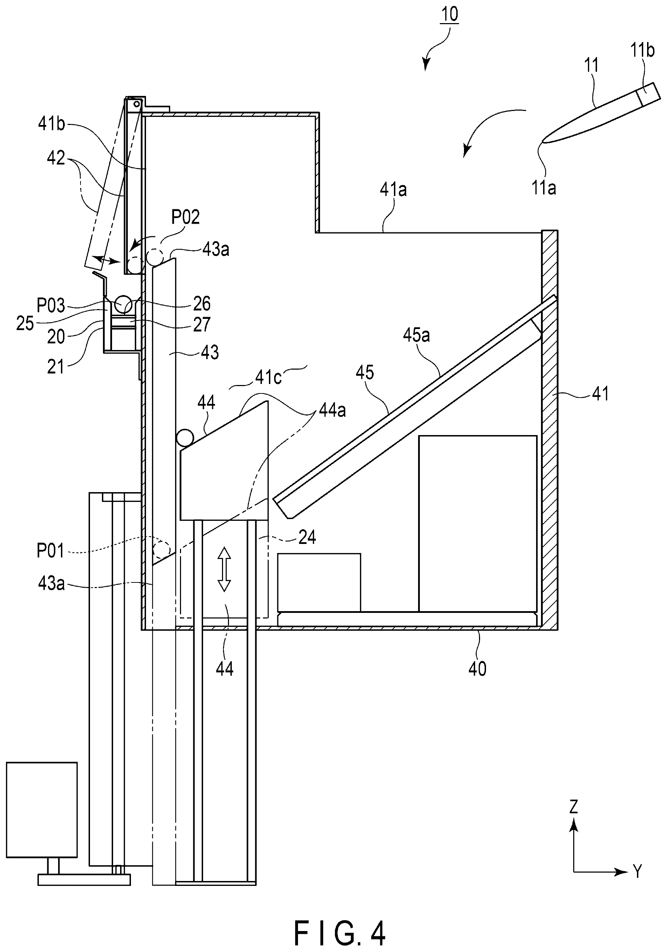

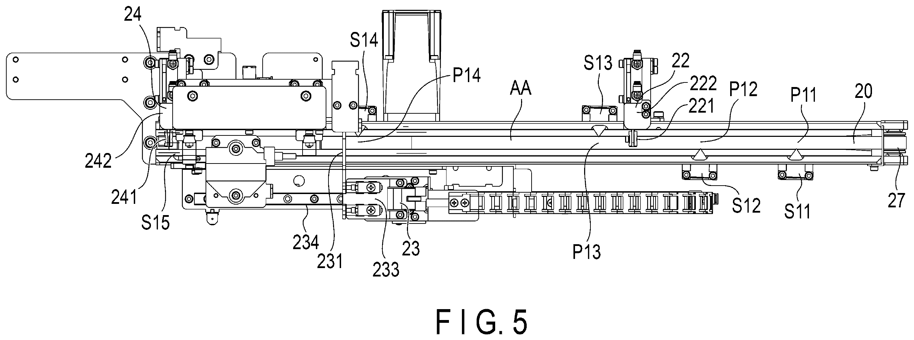

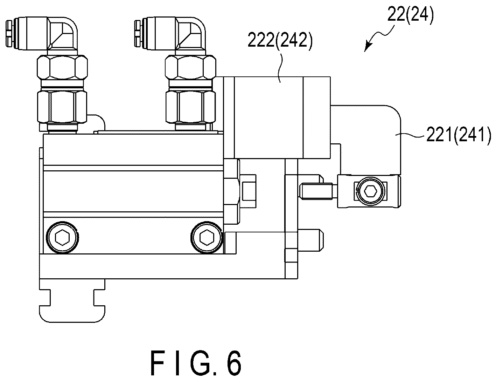

Hereinafter, a specimen processing apparatus 10 according to a first embodiment of the present invention will be described with reference to FIGS. 1 to 11. FIG. 1 is a plan view illustrating the specimen processing apparatus 10, and FIG. 2 is a front view of the specimen processing apparatus 10. FIG. 3 is a side view showing the feeder 40 of the specimen processing apparatus 10 in a partial cross section. FIG. 4 is a side view of the supply apparatus of the specimen processing apparatus. FIG. 5 is a plan view showing a configuration of a part of the specimen processing apparatus. In each drawing, the configuration is appropriately enlarged, reduced, or omitted. Arrows X, Y, and Z in the drawing indicate three directions orthogonal to each other, respectively. The arrow X conforms to the conveyance direction of the conveyor 20, the arrow Y conforms to the conveyance direction of the holder conveyor 60, and the arrow Z conforms to the vertical direction.

The specimen processing apparatus 10 is an apparatus that sets a plurality of specimen containers 11 in an upright state in a given holder conveyance path BB prior to various tests, and is used as one of preprocessing apparatuses of an analyzer, for example. For example, in the present embodiment, the specimen container 11 is an example of a specimen to be processed.

The specimen processing apparatus 10 includes a conveyor 20 that guides and conveys a specimen container 11 placed in a recumbent state along a predetermined route, a feeder 40 that feeds the specimen container 11 into a predetermined specimen conveyance path AA in a recumbent state, a detection apparatus 50 that detects a posture of the specimen container 11 in a recumbent state, a holder conveyor 60 that conveys a holder 12 holding the specimen container 11 along a predetermined path, an uprighting apparatus 80 that is an uprighting section that turns and raises the specimen container 11 to be inserted into the holder 12, a plurality of sensors S11 to S19 each detecting presence or absence of the specimen container 11 in the specimen conveyance path AA and detecting arrival of the specimen container 11 at a predetermined position, and a controller 90 that controls operation of each part.

The controller 90 is connected to the plurality of apparatuses 20, 40, 50, 60, and 80 and the plurality of position sensors S (S11 to S19). The controller 90 includes a storage section 91 that stores various types of information, and a controlling section 93 (data processor) that performs data processing such as calculation and determination based on identification information and the like and controls the operation of each part. The controlling section 93 includes, for example, a processing circuit including a processor, and controls each part to realize various functions of the specimen processing apparatus 10 according to an operating system or an application program.

The specimen container 11 is, for example, a tube type container formed of a transparent resin material or glass. For example, the specimen container 11 may contain contents such as blood, serum, and reagent, or may be empty. The specimen container 11 is, for example, a test tube or a blood sampling tube. The specimen container 11 is formed in a bottomed cylindrical shape having a bottom portion 11a, a head portion 11b opened, and a space for storing a specimen therein. The outer surface has a shape in which the diameter varies depending on the position in the axial direction, and the height varies depending on the position in the axial direction in the recumbent state. The specimen container 11 is formed by, for example, injection molding, and has a diameter increasing toward the opening.

The specimen processing apparatus 10 is configured to be able to process test tubes having different thicknesses and lengths. For example, several types of test tubes having a diameter of φ13 mm or φ16 mm and a length of 75 mm or 100 mm are targeted.

A detachable cap 11c that closes the opening is provided in the opening of the head portion 11b of the specimen container 11. The cap 11c includes hemogard plugs or rubber plugs of various colors, for example. For example, a barcode including identification information is attached to an outer peripheral side surface of the specimen container 11.

The conveyor 20 includes a belt conveyor type conveyance mechanism 21, a first stopper mechanism 22 as a first regulation unit provided at a predetermined position on the specimen conveyance path AA and configured to be able to regulate the movement of the specimen container 11, a push-out mechanism 23 as a second regulation unit configured to be able to move by pressing the specimen container 11 in a predetermined direction, a third stopper mechanism 24 as a third regulation unit, and a plurality of sensors S11 to S19.

The conveyance mechanism 21 includes a pair of guide rails 25 installed with a constant width along a predetermined specimen conveyance path AA, a conveyor belt 26 made of, for example, rubber arranged across the specimen conveyance path AA between the guide rails 25, a plurality of conveyance rollers 27 provided on the back side of the conveyor belt 26, and a motor 29 serving as a drive source for rotationally driving the conveyance roller 27. The specimen conveyance path AA of the conveyance mechanism 21 is a passage of the specimen container 11 formed on the conveyor belt 26, and is set along the X direction in the drawing. The conveyance mechanism 21 is configured to be able to convey the specimen container in a recumbent state along a predetermined specimen conveyance path AA including a lower portion of a discharge port 41b of the feeder 40.

Due to the feeding movement of the conveyor belt 26 accompanying the rotation of the conveyance roller 27, the specimen container 11 placed on the conveyor belt 26 between the pair of guide rails 25 is guided to the specimen conveyance path AA in a recumbent state and conveyed.

The first stopper mechanism 22 provided in the vicinity of the feeder 40 includes a blade 221 and an advancing and retracting drive unit 222 that advances and retracts the blade 221 with respect to the specimen conveyance path AA. The advancing and retracting drive unit 222 is a cylinder mechanism such as an air cylinder, and causes the blade 221 to reciprocate at a predetermined timing under the control of the controlling section 93. The blade 221 is configured to be able to enter the specimen conveyance path AA or retract to the outside of the specimen conveyance path AA by the advancing and retracting drive unit 222. The blade 221 is provided at a position where the blade can enter the specimen conveyance path AA.

The blade 221 can operate at a predetermined timing under the control of the controlling section 93, and is configured to be able to reciprocate between an approach position where the blade enters the specimen conveyance path AA and interferes with the specimen container 11 and a retreat position where the blade is out of the specimen conveyance path AA and does not interfere with the specimen container 11. In a case where the blade 221 enters the specimen conveyance path AA, the movement of the specimen container 11 is regulated by the blade 221 even if the conveyor belt 26 performs a feeding motion, and the specimen container 11 is stopped.

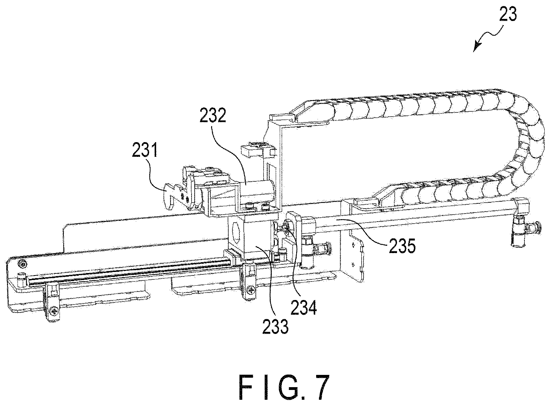

As illustrated in FIG. 7, the push-out mechanism 23 includes a blade 231 configured to be able to enter into or retract from the specimen conveyance path AA by a turning operation, and a moving mechanism 232 provided on a side portion of the specimen conveyance path AA to reciprocate the blade 231 in the front-rear direction of the specimen conveyance path AA. The moving mechanism 232 includes a support 233 that supports the blade 231, an advancing and retracting shaft 234 that advances or retracts the support 233, and a drive unit 235 that drives the advancing and retracting shaft 234. For example, the drive unit 235 is a cylinder mechanism such as an air cylinder, and advances or retracts the advancing and retracting shaft 234 at a predetermined timing under the control of the controlling section 93.

Under the control of the controlling section 93, the blade 231 is configured to be able to reciprocate between an approach position where the blade enters the specimen conveyance path AA and interferes with the specimen container 11 and a retreat position where the blade is out of the specimen conveyance path AA and does not interfere with the specimen container 11.

The blade 231 reciprocates in the front-rear direction of the specimen conveyance path AA. By moving the blade 231 forward in the conveyance direction in a state where the blade 231 has entered the specimen conveyance path AA, the specimen container 11 is pushed and moved forward in the conveyance direction even in a state where the conveyor belt 26 is stopped. In addition, the blade 231 returns to the original position by moving backward in the conveyance direction.

The third stopper mechanism 24 includes a blade 241 and a cylinder 242 that advances and retracts the blade 241. The blade 241 is configured to be able to enter the specimen conveyance path AA or retract to the outside of the specimen conveyance path AA by advancing and retracting operations by the cylinder 242. The blade 241 is provided at a position where the blade can enter the specimen conveyance path AA.

The blade 241 can be operated at a predetermined timing under the control of the controlling section 93, and is configured to be able to reciprocate between an approach position where the blade enters the specimen conveyance path AA and interferes with the specimen container 11 and a retreat position where the blade is out of the specimen conveyance path AA and does not interfere with the specimen container 11. In a case where the blade 241 enters the specimen conveyance path AA, the movement of the specimen container 11 is regulated by the blade 241 even if the conveyor belt 26 performs a feeding motion, and the specimen container 11 is stopped.

The feeder 40 includes a housing box 41 as a housing portion that forms a housing space 41c capable of housing a plurality of specimen containers 11, an opening and closing door 42 provided in a discharge port 41b formed on a side portion of the housing box 41, a push-up plate 43 that moves up and down in the housing box 41 to supply the specimen containers 11 to the discharge port 41b one by one, a drive source such as an air cylinder that moves up and down the push-up plate 43, an auxiliary block 44 that moves up and down in the vicinity of the push-up plate 43 to encourage movement of the specimen containers 11, and a drive source such as an air cylinder mechanism that moves up and down the auxiliary block 44.

The housing box 41 is provided adjacent to the specimen conveyance path AA of the conveyance unit. The housing box 41 is a housing having four side walls and a bottom wall, and forms a space for housing a plurality of specimen containers 11 therein. A feed port 41a is formed on an upper surface of the housing box 41. The discharge port 41b is formed in an upper portion of the side wall disposed on the side portion of the specimen conveyance path AA. The opening and closing door 42 for opening and closing the discharge port 41b is rotatably provided on an upper edge of the discharge port 41b. The lower edge of the discharge port 41b is positioned slightly above the conveyor belt 26. The specimen conveyance path AA of the conveyor 20 is disposed at a position immediately below the discharge port 41b, and the conveyor belt 26 is disposed correspondingly to the lower portion of the lower end edge of the opening and closing door 42.

In the internal space of the housing box 41, an inclined plate 45 forming a bottom surface inclined so as to descend from the feed port 41a side toward the discharge port 41b side is provided. The randomly input specimen containers 11 are collected on the discharge port 41b side by the inclined plate 45.

The push-up plate 43 is provided adjacent to the inside of the side wall of the housing box 41 where the discharge port 41b is provided. The push-up plate 43 is configured to be able to move up and down in a vertical direction indicated by an arrow in the drawing by a drive source. The upper end surface 43a of the push-up plate 43 has a width in which only one specimen container 11 can be disposed, and is, for example, larger than the diameter of the specimen container 11 and smaller than twice the diameter. The upper end surface 43a forms an inclined surface on which the discharge port 41b side descends. The specimen containers 11 are pushed up one by one as the push-up plate 43 moves up and down, and are supplied to the specimen conveyance path AA on the conveyor belt 26 through the discharge port 41b by the inclination of the upper end surface 43a.

The auxiliary block 44 is provided adjacent to a rear side of the push-up plate 43. The push-up plate 43 is configured to be able to move up and down in a vertical direction indicated by an arrow in the drawing by a drive source such as an air cylinder. The upper end surface 44a of the auxiliary block 44 is continuous with an upper surface 45a of the inclined plate 45 in the descended state, and forms an inclined surface continuous with the upper end surface 43a of the push-up plate 43 in the descended state. The inclination angle of the upper surface 45a of the inclined plate 45 is set to be equal to the inclination angle of the upper end surface 44a of the auxiliary block 44 or slightly steeper than the upper end surface 44a. The upper end surface 44a of the auxiliary block 44 is slightly more gently inclined than the upper end surface 43a of the push-up plate 43. As the auxiliary block 44 moves up and down, the plurality of specimen containers 11 randomly arranged in various directions in the housing space 41c sequentially moves one by one to the elongated gap on the push-up plate 43. At this time, the longitudinal direction is aligned along X. Then, the specimen containers 11 are individually sent to the discharge port 41b one by one due to upward movement of the push-up plate 43, and are supplied onto the conveyor belt 26 by opening the opening and closing door 42.

The plurality of sensors S11 to S19 are provided at predetermined locations respectively in the passage through which the specimen container passes. For example, the sensors S11 to S15 are provided on the side portion of the specimen conveyance path AA, the sensor S16 is provided on a turning mechanism 82, and the sensors S17, S18, and S19 are provided on the side portion of the passage in a case where the specimen falls in the upright state.

The sensors S11 to S18 are reflective sensors that detect the presence or absence of an object. Among these, the sensors S11 to S18 are, for example, optical sensors, include a light source, an optical path, and a photoelectric unit, and convert an optical signal into an electrical signal.

The sensor S19 is, for example, a fiber sensor that transmits a signal from a light source through an optical fiber or the like.

For example, the detecting positions of the sensors S11 to S19 are set at predetermined positions of the passage through which the specimen container passes. For example, they are provided on the specimen conveyance path AA sent in the recumbent state or on a passage in the case of falling in the upright state. For example, a light source and a photoelectric unit provided on a side of the detecting position of the passage are provided.

The detecting positions of the sensors S11 and S12 are set below the opening and closing door. In addition, the sensor S13 is provided at a position adjacent to the downstream side of the position stopped by the first blade 221.

The position of the sensor S13 is located on the downstream side by a predetermined distance smaller than the length of the specimen container from an assumed position where the portion on the head side of the specimen container discharged from the opening and closing door is arranged. For example, the detecting position P13 of the sensor S13 is set at a position closer to the portion where the head of the specimen container 11 at the time of discharge of the preceding process is arranged than the portion where the tail of the specimen container 11 is arranged at the time of measurement by the inclination sensor of the next process. For example, the distance from the blade 221 to the detecting position P13 in the conveyance direction is smaller than half the length of the specimen container 11. In addition, the third sensor S13 is set at a position separated from the fourth sensor S14 on the downstream side on the upstream side by a distance larger than the length of the specimen container 11. In the sensor S13, in a case where the sensor S13 is switched from ON to OFF and it is detected that the specimen container 11 has passed, the detecting position P13 is set such that the next specimen container 11 is arranged in the specimen conveyance path AA and simultaneous processing is performed at the time of detection by the inclination sensor by supplying the next specimen container 11 onto the specimen conveyance path AA at the discharge position. For example, the specimen containers 11 at the time of detection by the inclination sensor and the specimen containers 11 conveyed on the upstream side are arranged at a pitch shorter than the length of one specimen container 11.

As the simultaneous processing, for example, during the measurement in P15 by the inclination sensor of a certain specimen 11, another specimen (specimen container 11) is discharged from the housing box 41 of the feeder 40, and the specimens are prepared at the positions of P14 and P12.

Here, an example of a positional relationship between the detecting position and each sensor will be described. As an example, the specimen 11 is set so that a maximum of three specimens can be arranged on the conveyor belt 26, and for example, the specimens 11 are arranged at three positions of P15, P14, and P12, and simultaneous processing is performed.

The detecting position P11 of the sensor S11 is set to a position where the specimen 11 discharged from the housing box 41 of the feeder 40 can be detected. The detecting position P12 of the sensor S12 is a position where the specimen 11 in the case of stopped by the stopper of the stopper mechanism 22 can be detected. The detecting position P13 of the sensor S13 is a position where it can be confirmed that the specimen 11 has passed by the shortest distance on the downstream side of the stopper of the stopper mechanism 22. The detecting position P14 of the sensor S14 is a position where the specimen 11 stopped by the push-out mechanism 23 can be detected. The detecting position P15 of the sensor S15 is a position where the specimen 11 stopped by the stopper mechanism 24 can be detected. The detecting position P16 of the sensor S16 is a position where the specimen 11 held by the holding mechanism 81 of the uprighting apparatus 80 can be detected. The detecting position P17 of the sensor S17 is a position where passing of the specimen can be detected at the shortest distance in the direction in which the specimen 11 falls from the uprighting apparatus 80. The detecting position P18 of the sensor S18 is a position where floating of the specimen can be detected in a case where the specimen is not normally inserted into the holder 12. The detecting position P19 of the sensor S19 is a position where it can be confirmed that the specimen 11 has arrived at the position of the holder 12.

The detecting position P14 of the fourth sensor S14 is disposed in the vicinity of the push-out blade 231 (second blade). For example, it is provided adjacent to the upstream side of the push-out blade 231. The detecting position P14 of the fourth sensor S14 is set at a position on the upstream side by a distance smaller than the length of one specimen container 11 with respect to the tail end position of the specimen container 11 at the detecting position by the inclination sensor 51.

The fifth sensor S15 is installed near the third blade 241, for example, at a position adjacent to the upstream side of the third blade 241. The third blade 241 is disposed between a position where the head portion of the specimen container at the inclined position is disposed and a position where the end portion of the specimen container at the rotational position is disposed. The fifth sensor S15 is also disposed in the vicinity of the head position of the inclination detection. In a case where the detection by the fifth sensor S15 is ON, it is determined that the insertion into the turning mechanism 82 is not completed, and the pushing operation by the push-out blade 231 is performed.

The sixth sensor S16 provided in the turning mechanism 82 is a specimen presence/absence check sensor. In a case where the specimen is clamped by the specimen clamping mechanism of the turning mechanism 82 after the specimen is pushed in, the controlling section 93 confirms that the specimen presence/absence sensor S16 is ON, and rotates it.

The seventh sensor S17 is a sensor that is provided between the turning mechanism 82 and the lower cylindrical portion and detects passing of the specimen. For example, the sensor S17 is installed at a position where the specimen container 11 having a length of 100 mm can reliably pass, and at a position where it can be detected as soon as possible that the specimen container 11 has passed from the uprighting apparatus 80 of the turning mechanism 82.

The eighth sensor S18 is provided at an intermediate position of the cylinder. The eighth sensor S18 is a sensor that determines whether the specimen is not floating (a state in which the specimen is not normally inserted into the holder 12) after the specimen is pushed into the holder 12. That is, the sensor S18 is used after being pushed into the holder 12. If the eighth sensor S18 is turned ON after the specimen is pushed in, the controlling section 93 retries the pushing operation. The sensor S18 detects whether the specimen is normally inserted after the specimen is inserted into the holder 12. That is, in a case where the specimen is not normally inserted into the holder 12, the sensor S18 is turned ON.

The ninth sensor S19 is provided at the lower end portion of the cylinder. The ninth sensor S19 is, for example, a fiber sensor. The sensor S19 detects that the specimen has arrived at the holder 12.

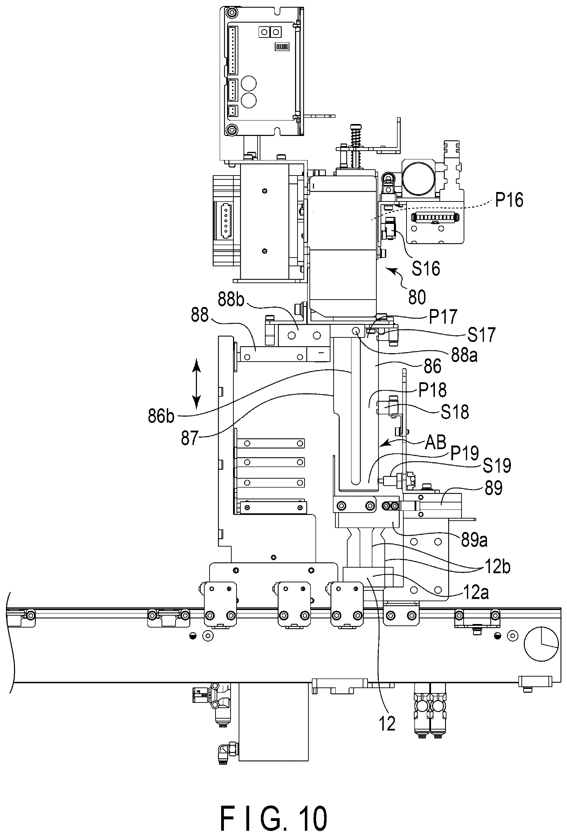

For example, as indicated by arrows in FIG. 5, the sensors S11, S12, and S15 emit light from the front side, and the sensors S13 and S14 emit light from the back side. In addition, as indicated by arrows in FIG. 10, the sensors S17, S18, and S19 emit light from the side.

Based on the detection results of the sensors S11 to S19, the controlling section 93 detects whether there is a specimen container at the detecting positions P11 to P19. Then, in a case where there is no specimen container at the detecting positions P11 to P19, processing of supplying the specimen container from the upstream side is performed by performing feeding processing of the next specimen container, that is, the next specimen on the upstream side of the detecting positions P11 to P19.

As a specific example, in a case where there is no specimen container in the first position sensor S11 and the second position sensor S12, the controlling section 93 supplies the specimen container in the recumbent state to the feed points P11 and P12 by opening the opening and closing door 42. Since the conveyor is in an operating state, the supplied specimen container is sent to the downstream side as it is.

In addition, the controlling section 93 determines that the passing of the specimen is completed in a case where the specimen passes through the detecting position P13 of the third sensor S13 and the third sensor S13 changes from ON to OFF according to the detection result of the third sensor S13.

The controlling section 93 controls the operation of the blade 221 based on the detection result of the fourth sensor S14. For example, in a case where the specimen container 11 is dammed by the blade 221 and the space in front is empty, that is, in a case where the sensor S14 is OFF, the specimen container 11 is sent forward.

In the feeding processing of feeding the specimen from the second blade 231 toward the third blade 241, the controlling section 93 opens the second blade 231 in a case where the fifth sensor S15 is OFF (no specimen is present). That is, in the control of the second blade 231, it is determined that the specimen can be sent forward in a case where the presence or absence of the specimen is OFF in the sensor S15.

In a case where the conditions are met, the specimen is carried from the feed point to the third blade 241 at once without stopping in the first blade 221 and the second blade 231.

After a tilting member 52 is raised, the blade 241 is opened and the specimen is sent forward. At this time, in a case where the sensor S15 is ON for a certain period of time, it is determined that the specimen 11 remains, and the specimen is forcibly pushed out toward the turning mechanism 82 by the push-out mechanism 23. On the other hand, in a case where the sensor S15 is OFF, it is determined that the specimen 11 has moved to the turning mechanism 82, and the blade 241 is closed to wait for the next specimen.

According to the detection result of the specimen presence/absence sensor S16 of the turning mechanism 82, in a case where the sensor S16 is OFF, the specimen is sent forward by the blade 241.

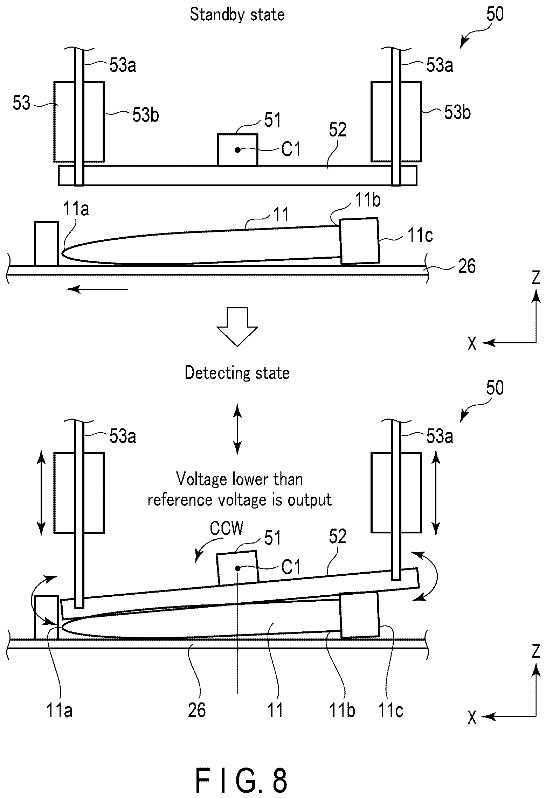

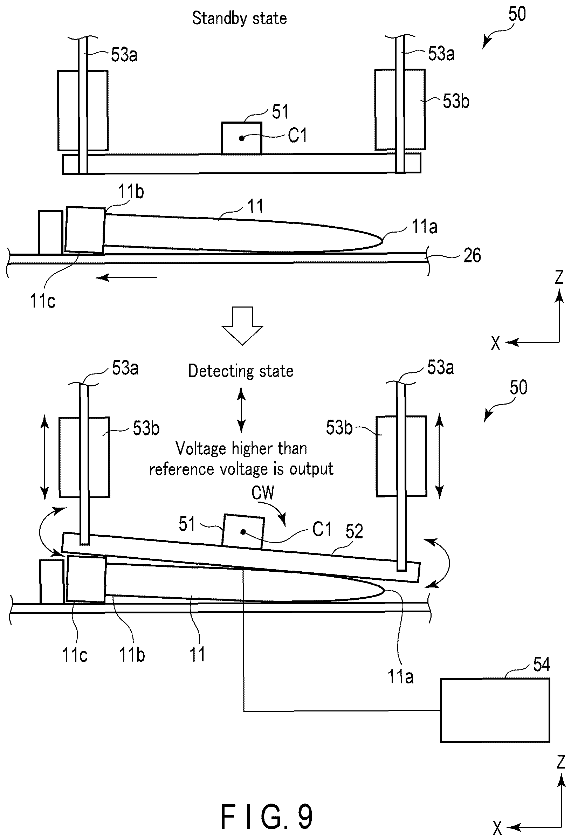

FIGS. 8 and 9 are explanatory diagrams of detection processing by the detection apparatus 50. FIG. 8 illustrates a standby state (standby position) and a detecting state (detecting position) in a case where the head portion 11b is located forward in the conveyance direction. FIG. 9 illustrates a standby state (standby position) and a detecting state (detecting position) in a case where the bottom portion 11a is located forward in the conveyance direction. As illustrated in FIGS. 8 and 9, the detection apparatus 50 includes a tilting member 52 on which an inclination sensor 51 is mounted, a moving apparatus 53 that moves the tilting member 52 in an inclinable manner, and an A/D converter 54 that converts an output voltage of the inclination sensor 51. The detection apparatus 50 is connected to the controlling section 93.

The detection apparatus 50 presses and inclines the tilting member 52 on which the inclination sensor 51 is mounted to the specimen container 11 conveyed in the recumbent state, and determines the posture of the specimen container 11 from the inclination information (posture information) of the tilting member 52 as the information of the outer shapes of the bottom portion 11a side and the head portion 11b side of the specimen container 11.

The tilting member 52 is a flat plate, and is moved between the standby position and the detecting position by the moving apparatus 53. For example, the tilting member 52 intersects the Z axis and has an opposing surface (detection surface) pressed against the outer peripheral surface of the specimen container 11 from above the specimen container 11. The tilting member 52 is formed in a plate shape or a block shape having a length equivalent to the entire length of the specimen container 11 in the X direction and the Y direction. The tilting member 52 is supported in an inclinable manner by the floating mechanism of the moving apparatus 53. The specimen container 11 is pressed against the specimen container from above, and is inclined in a posture following the shape of the outer surface of the specimen container. That is, the tilting member 52 has an opposing surface that is a portion following the outer shape of the specimen container 11.

The inclination sensor 51 is installed on the upper surface of the tilting member 52. The inclination sensor 51 outputs a voltage corresponding to the inclination angle in a case where the posture changes along with the inclination of the tilting member 52. That is, the inclination sensor 51 detects the inclination angle of the tilting member 52 having the opposing surface following the outer shape of the specimen container 11 as the outer shape information of the specimen container 11. For example, the inclination sensor 51 can detect, for example, the turning angle around the rotation axis C1 along the Y direction, and the detection angle range is 360°. The inclination sensor 51 outputs an analog voltage corresponding to the inclination angle. The output voltage is input to the controlling section 93 via the A/D converter 54 of the PLC. For example, whether it is inclined to the + side or the - side is quantified. In the determination, a conveyor (belt) surface on which the specimen container 11 to be measured is placed is used as a reference value, and the inclination of the specimen is determined by confirming a difference between detection values after detection of the specimen. At this time, in order to make a determination earlier, a difference in the change amount until the measurement result of the sensor is obtained is observed and determined. That is, the posture is determined based on the posture information detected during the movement of the tilting member.

For example, TURCK B1N360V-Q20L60-2LU3-H1151 or OMRON D5R-L02-15 was used as the inclination sensor 51. For example, the inclination sensor 51 outputs a voltage of 0.1 V to 4.9 V in an angular range of 0° to 360° as an initial setting. As an example, the inclination sensor 51 has a teaching function and can set resolution in a specific range. For example, high resolution can be set in a specific angular range so as to output a voltage of 0.1 V to 4.9 V in a desired angular range (± several degrees), and inclination information can be detected with high accuracy by setting the angular range according to the shape of the test tube.

The moving apparatus 53 includes a guide shaft 53a (support shaft), a guide rail 53b, and a drive unit. The moving apparatus 53 is connected to the controlling section 93, rotatably supports both ends of the tilting member 52, and moves the tilting member in a predetermined moving direction.

The guide shaft 53a extends in the Z direction, and has a lower end portion rotatably connected to both ends of the tilting member 52 in the conveyance direction. The guide shaft 53a is engaged with the guide rail 53b and supported so as to be reciprocable in the Z direction orthogonal to the support surface of the conveyor belt. That is, the tilting member 52 moves in a direction of coming into contact with and separating from the support surface that supports the specimen container 11.

The moving apparatus 53 moves the tilting member 52 between the standby position and the detecting position by reciprocating the guide shaft 53a in the Z direction along the guide rail 53b. The tilting member 52 is tilted in a posture following the shape of the specimen container 11 at the time of detection. That is, for example, the tilting member 52 is inclined due to a difference in position between the guide shaft 53a on the side having a larger diameter and the guide shaft 53a on the side having a smaller diameter of the specimen container 11.

In the present embodiment, as an example, the posture can be determined from the state by using the fact that the outer diameters of the bottom portion 11a of the specimen container 11 and the head portion 11b provided with the cap 11c are different.

For example, as illustrated in FIG. 8, in a case where the head portion 11b side having a large diameter is on the head side, the inclination sensor 51 is inclined in a CW direction at the time of detection and outputs a voltage higher than the reference voltage.

On the other hand, for example, as illustrated in FIG. 9, in a case where the bottom portion 11a side having a small diameter is on the head side, the inclination sensor 51 is inclined in a CCW direction at the time of detection and outputs a voltage lower than the reference voltage.

Therefore, in the controlling section 93, the output voltage on the conveyor (belt) surface on which the specimen container 11 to be measured is placed is set as a reference voltage, a difference between the output voltage at the time of detection and the reference voltage is detected, which of the head portion 11b and the bottom portion 11a is disposed on the head side is detected based on the positive or negative of the difference, and the posture of the specimen container 11 is detected.

The holder conveyor 60 is a conveyor type conveyance mechanism similar to the conveyor 20, and a predetermined holder conveyance path BB passing through an insertion point below the guide member 86 in the uprighting apparatus 80 is set. The holder conveyance path BB is a path of the holder 12 formed on the holder conveyance belt 62, and is set along the Y direction in the drawing. The holder conveyor 60 includes a pair of guide rails 61 installed with a constant width along a predetermined holder conveyance path BB, a conveyor belt 62 disposed between the pair of guide rails, a conveyor roller that is rotationally driven on the back side of the conveyor belt to move the conveyor belt, a motor as a drive source for driving the conveyor roller, and the like.

The holder 12 includes a tubular holding base 12a having an insertion hole open at an upper portion, and a plurality of holding pins 12b erected upward from an upper end of an outer periphery of the holding base 12a. A plurality of engaging grooves that engage with the guide rail 25 are formed on the outer periphery of the holding base 12a. An empty holder 12 is set in advance on the conveyor belt of the holder conveyor 60, and is sent from the upstream side to the downstream side by the movement of the conveyor belt. The holder 12 is stopped by the holding mechanism 81 at an insertion point in the middle of the holder conveyance path BB, and the specimen containers 11 are inserted into the insertion holes of the holder 12 one by one.

The uprighting apparatus 80 includes a holding mechanism 81 configured to be able to hold and open the specimen container 11 in the recumbent state, a turning mechanism 82 that raises the specimen container 11 by rotating the specimen container to position the bottom portion 11a downward, and an insertion mechanism 83 that inserts the specimen container 11 in the upright state into the holder 12.

The holding mechanism 81 includes a pair of holding plates 84 and 85 arranged to face each other and capable of holding the specimen container 11 therebetween. The pair of holding plates 84 and 85 is configured to be openable and closable so as to come into contact with and separate from each other in the Z direction under the control of the controlling section 93, for example. That is, for example, by moving the upper holding plate 84 up and down, it is configured to be switchable between a state to hold the specimen container 11 with a small distance between the holding plates 84 and 85 and a state to release the specimen container 11 with a large distance between the pair of holding plates 84 and 85.

The turning mechanism 82 is configured to be able to turn the holding mechanism 81 that holds the specimen container 11 in both directions of arrows A1 and A2 about a predetermined rotation axis C1. The turning operation of the turning mechanism 82 is controlled by the controlling section 93. The direction of the turning is determined based on the information detected by the detection apparatus 50. That is, the direction is determined to be one of the directions of the arrows A1 and A2 such that the bottom portion 11a of the specimen container 11 is positioned downward and the head portion 11b on which the cap 11c is disposed is positioned upward by being turned by 90 degrees according to the detected direction of the specimen container 11.

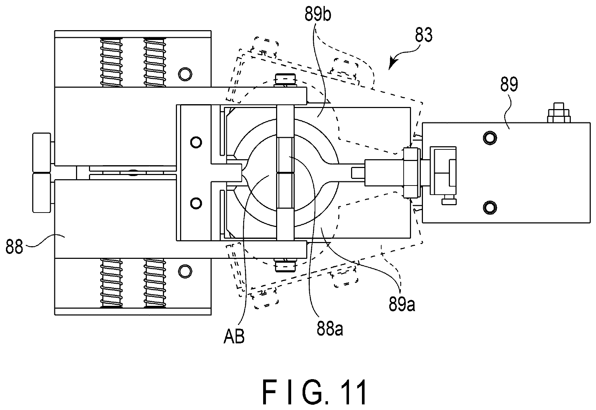

FIG. 10 is a side view showing the insertion mechanism 83 of the uprighting apparatus 80 in a partial cross section. FIG. 11 is a top view of the insertion mechanism 83. As illustrated in FIGS. 10 and 11, the insertion mechanism 83 includes a guide mechanism 87 that regulates the moving direction of the specimen container 11 downward along the Z direction, and a push-down mechanism 88 that pushes the specimen container 11 downward. The guide mechanism 87 includes a tubular guide member 86 (guide tube) provided below the turning mechanism 82 and a support 89 provided below the guide member 86. The guide member 86 has a circular tubular shape having a guide hole 86a extending in the Z direction, and a slit 86b cut vertically to allow the movement of the push-in pin 88a is formed in a part of the peripheral wall.

The support 89 is a chuck mechanism including a pair of holding pieces 89a and 89b that are opened and closed by rotation and configured to be able to open and close at a predetermined timing under the control of the controlling section 93. The support 89 supports the periphery of the specimen container 11 pushed downward by the push-down mechanism 88, and regulates the moving direction in the vertical direction.

The push-down mechanism 88 includes a pair of pins 88a configured to be able to move forward and backward, and a pin drive unit 88b such as an air cylinder that moves the pins 88a forward and backward and up and down. The pin 88a is configured to be movable between an approach position where the pin enters the specimen conveyance path AA of the specimen container 11 supported by the guide mechanism 87 and a retraction position where the pin retracts from the specimen conveyance path AA. When the pin 88a descends along a descending path AB in an entering state, the cap 11c provided on the head portion 11b of the specimen container 11 is pushed downward and inserted into the empty holder 12 set in the holder conveyor 60 below.

As a configuration of the push-down mechanism 88, in a case where the specimen container 11 is naturally dropped when the support 89 is opened, the specimen container 11 is placed above the minimum diameter portion of the holder 12. Therefore, in this case, the position of the pin 88a is set at a position where the pin can enter slightly above the upper end of the specimen container 11.

Next, a specimen processing method according to the present embodiment will be described. The specimen processing method of the present embodiment includes: a feed process of feeding a plurality of specimen containers 11 into the specimen conveyance path AA one by one by the feeder 40; a conveyance process of sequentially sending the specimen containers 11 one by one to each process position in a recumbent state by the conveyor 20; a detection process of detecting a posture of the specimen container 11 in the recumbent state by the detection apparatus 50; an uprighting process of holding the specimen container 11 by the holding mechanism 81 of the uprighting apparatus 80 and turning and raising the specimen container by the turning mechanism 82; and an insertion process of descending the specimen container 11 in the upright state along the descending path AB by the insertion mechanism 83 of the uprighting apparatus 80 and inserting the specimen container 11 into the lower holder 12. These processes are controlled by the controlling section 93, and a series of processes including feeding, conveying, detecting, holding, turning, opening, and holder insertion is sequentially performed on one specimen.

A plurality of specimen containers 11 are housed in the housing space 41c of the housing box 41. For example, a plurality of the specimen containers 11 are randomly input from the feed port 41a by work or the like after blood sampling. At this time, the specimen containers 11 are gathered toward a gathering point P01 at the lower end portion on the discharge port 41b side by the inclined plate 45 in the housing space 41c.

As the feed process, the controlling section 93 causes the push-up plate 43 and the auxiliary block 44 to move up and down at predetermined time intervals, and opens and closes the opening and closing door 42 at predetermined time intervals. Due to the upward movement of the push-up plate 43, the specimen containers 11 gathered at the bottom portion of the housing space 41c on the discharge port 41b side are lifted one by one, and sent to a lifted-up point P02 on the back side of the opening and closing door 42. Then, the specimen container 11 is dropped by opening of the opening and closing door 42, and is supplied to a feed point P03 on the conveyor belt 26 disposed below the discharge port 41b.

For example, in the feed process, the controlling section 93 detects the presence or absence of the specimen by the sensors S11 and S12, and controls to open the opening and closing door 42 and feed the specimen container to the specimen conveyance path AA in a case where it is detected that there is no specimen container at the feed points P11 and P12 immediately below a release point of the opening and closing door 42. On the other hand, in a case where there is a specimen container immediately below the release point of the opening and closing door 42, control is performed so as to wait for feeding until the specimen container is sent downstream and is no longer detected.

In this feed process, due to the operation of moving the push-up plate 43 and the auxiliary block 44 up and down, the movement of the specimen containers 11 is promoted, and the specimen containers 11 are sequentially sent one by one to the upper end surface 43a of the push-up plate 43. By repeating this operation, the posture of the randomly housed specimen containers 11 is aligned one by one at regular time intervals such that the longitudinal direction thereof is along the X direction, and the specimen containers are automatically sent to the feed point P03. At this time point, which of the head portion 11b and the bottom portion 11a is located on the head side in the conveyance direction is not determined, and is different for each specimen container 11.

As the conveyance process, the controlling section 93 controls the feeding motion and stop of the conveyor belt 26 at predetermined time intervals, and also controls the advancing and retracting operations of the blades 231 and 241 of the stopper mechanism 24 and the push-out mechanism 23 and the forward and backward movement of the blade 231.

As the conveyance process, the controlling section 93 starts the rotation of the belt in a case where any of the specimen presence/absence sensors S11 to S15 installed in the conveyance unit is turned on. On the other hand, in a case where all the specimen presence/absence sensors S11 to S15 are OFF for a certain period of time, or in a case where there is no specimen in the housing space 41c and the operation is stopped, the belt stops rotating. That is, in a case where the specimen container is present on the route from the feeding unit to the P15, the conveyance motion by the belt is always performed.

In a case where the blades 221, 231, and 241 are closed, the specimen containers are stopped at the positions of the blades 221, 231, and 241, respectively. In a case where the blades 221, 231, and 241 are opened, the specimen containers flow to the downstream side by the conveyance motion of the belt.

The specimen container 11 at the feed point P11 is sent forward by the retraction of the blade 221 of the stopper mechanism 22 and the feeding motion of the conveyor belt 26.

For example, in a case where the specimen container passes through the sensor S13 and the sensor S13 changes from ON to OFF, the controlling section 93 determines that the passing of the specimen container 11 has completed. That is, in a case where the sensor S13 in the vicinity of the first blade 221 no longer detects the specimen container 11, the opening and closing door 42 is opened to further feed a specimen container 11.

Further, for example, the controlling section 93 opens the blade 221 in a case where the sensor S14 is turned OFF. In a case where the sensor S14 is turned ON, the blade 221 is closed. For example, in a case where the blade 221 is opened, the specimen container is sent toward the downstream side of the blade 221 by the feeding operation of the conveyor belt 26. On the other hand, in the closed state, even when the conveyor belt 26 performs the feeding operation, the specimen container is stopped at the position of the blade 221.

In addition, in a case where the sensor S15 is turned OFF according to the detection result of the sensor S15 and the specimen container 11 (specimen) is not present, the controlling section 93 opens the second blade 231 and sends the next specimen container 11. If the conditions are met, the specimen container 11 (specimen) is carried to the third blade 241 at once without stopping the specimen container 11 (specimen) by the first and second blades 221 and 231. That is, if the specimen container 11 is not present first, the specimen container 11 is conveyed one after another to the detecting position without being stopped.

For example, in response to S15 is turned ON, the controlling section 93 controls the detection apparatus 50 to move the tilting member to the contact position, and detects the output voltage of the inclination sensor 51 inclined together with the tilting member inclined by the floating mechanism.

With an output voltage on a conveyor (belt) surface on which the specimen container 11 to be measured is placed as a reference voltage, a difference between the reference voltage and an output voltage of the inclination sensor at the time of detection is calculated, and the inclination direction of the inclination sensor 51 is determined. Then, from the output result of the inclination sensor 51, it is determined (detected) whether the posture of the specimen container 11, that is, the head portion 11b or the bottom portion 11a is on the head side.

For example, in a case where the reference value is set with the conveyor (belt) surface on which the specimen container 11 to be measured is placed as 0, as illustrated in FIG. 8, in a case where the head portion 11b on which the cap 11c is disposed is on the head side, the difference between the voltage value from the inclination sensor 51 and the reference value becomes a positive value. On the other hand, as illustrated in FIG. 9, in a case where the bottom portion 11a is on the head side, the difference between the voltage value from the inclination sensor 51 and the reference value becomes a negative value. In this case, in the case of positive, it is determined that the head portion 11b is in the posture positioned on the head side, and in the case of negative, it is determined that the bottom portion 11a is in the posture disposed on the head side. Note that the correspondence relationship between the detection value and the posture can be appropriately changed by setting. Of course, the correspondence relationship between the positive and negative and the posture may be reversed.

Here, as a method of quantifying the inclination angle of the specimen, for example, whether the specimen is inclined to the + side or the - side is quantified. In the determination, inclination of the specimen is determined by confirming a difference between a reference value in a flat state and a detection value after detection of the specimen.

Based on the detection result of the detection apparatus 50, the controlling section 93 determines the rotation direction of the specimen container 11 with the uprighting apparatus 80 such that the bottom portion 11a of the specimen container 11 faces downward.

At the timing when the detection process ends, the third stopper mechanism 24 is released, and the third blade 241 is retracted and opened. As a result, the specimen container 11 is sent to the turning mechanism 82 on the downstream side by the motion of the specimen conveyance path AA.

Here, the detection process does not need to wait until it is completely lowered down, and the detection is completed at a time point in a case where it becomes plus or minus to some extent on the way.

Then, after the determination of the vertical discrimination of the specimen is completed and the measurement component returns to the initial position (the fully raised position), in a case where the condition is satisfied, the third blade 241 is opened. Here, the opening condition includes that the tilting member 52, which is the measurement component, has returned to the initial position, that the posture of the uprighting apparatus 80 on the downstream side has returned to the original posture and is in an insertable state, and that the specimen presence/absence sensor S16 provided in the turning mechanism 82 is turned OFF.

Since the conveyor belt 26 is in a state of being continuously operated from before the measurement, in a case where the specimen container 11 is smoothly inserted into the uprighting apparatus 80 by the release of the third blade 241, the process proceeds to the next step. If not, the specimen 11 is pushed into the uprighting apparatus 80 by the push-out mechanism 23 that pushes the specimen 11 into the uprighting apparatus 80.

In a case where the push-out mechanism 23 returns to the initial position, the third blade 241 is closed, and the S15 sensor is OFF, the blade 231 is opened, and the next specimen container 11 is caused to flow to the detecting position by the inclination sensor.

On the other hand, in a case where the fifth sensor S15 is not turned off after the third blade 241 is opened, the specimen container 11 is pushed out and inserted into the uprighting apparatus 80 by advancing the second blade 231 by the shaft 234 while the second blade 231 is in the closed state, and then the specimen container is returned by retreating the shaft 234.

Regarding the determination as to whether the specimen 11 has entered the uprighting apparatus 80, in a case where the fifth sensor S15 is turned OFF and the specimen presence/absence sensor S16 of the turning mechanism 82 is turned ON, it is determined that the specimen is disposed in the uprighting apparatus 80. In a case where the specimen is present at the position P15 of the fifth sensor, it can be detected by the S15 sensor.

The condition of the operation for sending the specimen from the detecting position of the detection apparatus 50 to the turning mechanism 82 is that the specimen presence/absence sensor S16 of the turning mechanism 82 is turned OFF in addition to "rising of the tilting member 52 due to completion of measurement" × "the uprighting apparatus 80 is returned to its original state", and in a case where these conditions are not satisfied, the third blade 241 is closed.

The support 233 is advanced by the advancing and retracting shaft 234 in a state where the blade 231 of the push-out mechanism 23 is arranged at the approach position, and the specimen container 11 is pushed out and sent to the front holding position.

The controlling section 93 controls the holding mechanism 81 to hold the specimen container 11, and performs a turning operation of turning the turning mechanism 82 in a state of holding the specimen container 11 by 90 degrees in a desired direction, thereby bringing the specimen container 11 into an uprighting posture and releasing the holding.

At this time, the controlling section 93 controls the rotation direction according to the posture of the specimen container 11 detected by the detection apparatus 50 such that the bottom portion 11a is arranged to be positioned below after the rotation. For example, if the head portion 11b is in a posture on the front side in the conveyance direction, the head portion is rotated in the first rotation direction A1 that is the clockwise direction. If the bottom portion 11a is in a posture ahead in the conveyance direction, the rotation is performed in the second rotation direction A2 that is the counterclockwise direction.

The specimen container 11 is turned into the upright state by the rotation in the turning mechanism 82, and falls downward in a case where the holding state is released by the holding mechanism 81. The specimen container 11 is guided by a guide hole 86a of a guide member 86 provided below the holding mechanism 81 and sent to the insertion position. The conveyor belt of the holder conveyor 60 is disposed at the insertion position, and an empty holder 12 is set in advance.

Here, for example, in a case where the position detection of the sensor S17 is turned OFF, the controlling section 93 returns the turning mechanism 82 to the original recumbent state assuming that the specimen container 11 has passed downward from the turning mechanism 82. Therefore, by returning the turning mechanism 82 to the initial position more quickly, the next specimen 11 can be fed, and the operation of pushing the specimen into the holder 12 and the feeding of the next specimen to the turning mechanism 82 can be processed simultaneously, and the processing capability can be improved.

The controlling section 93 controls the holder conveyor 60 to perform feeding operation and stop of the holder conveyance path BB. In addition, the controlling section 93 controls the guide mechanism 87 of the insertion mechanism 83 to repeat the operation of holding or opening the outer periphery of the specimen container 11, and controls the push-in mechanism 88 to perform the advancing and retracting operation and the moving up and down operation of the push-in pin 88a. By this operation, the specimen container 11 sent to the insertion position in the upright state is pushed while being guided downward, and the specimen container 11 is sequentially inserted into the empty holder 12 sent from the upstream of the holder conveyance path BB. Further, along with the feeding motion of the holder conveyor 60, the holder 12 into which the specimen container 11 is inserted is sent downstream.

The controlling section checks the passing of the specimen 11 by the sensor S17.

In addition, the controlling section 93 confirms whether the specimen is normally inserted after the specimen is inserted into the holder 12 by the sensor S18. For example, in a case where it is not normally inserted, the sensor S18 is turned ON.

In addition, the controlling section 93 confirms whether the specimen has arrived at the holder 12 by the sensor S19.

The specimen processing apparatus 10 and the specimen processing method according to the present embodiment can improve processing efficiency.

In a case where the first stopper mechanism 22 is turned OFF after the specimen is discharged by the feeding, it is determined that the passing is completed, whereby the loss time until the determination can be eliminated. Therefore, for example, in the case where the passing is determined to be completed in a case where the specimen arrives in the vicinity of the third stopper mechanism 24 (in a case where the sensor is turned on for a certain period of time), the processing speed can be increased as compared with the case of determining that the passing is completed.

In a case where the detection is OFF by the fifth sensor S15, the second blade 231 of the push-out mechanism 23 is opened, so that the specimen is carried to the third blade 241 at once without being stopped by the first blade 221 and the second blade 231 if conditions are met, and thus the processing speed can be increased.

In addition, the inclination sensor generally waits until the numerical value is stabilized, but according to the present embodiment, the determination is made without waiting until the numerical value is stabilized, so that the processing can be performed quickly. For example, conventionally, it is general that after a predetermined time (1 second) elapses after the measurement component completely descends to the specimen, the numerical value of the inclination sensor is acquired to determine the vertical direction of the specimen, and 2 to 3 seconds are required. However, in the present embodiment, the determination is made according to the output until the measurement result is obtained, so that the vertical direction of the specimen can be determined with the measurement waiting time of 0.5 seconds, instead of 1 second.

In addition, conventionally, in a case where the specimen is caused to fall from the rotation unit to the cylinder, after it is confirmed that the specimen presence/absence sensor S19 installed on the conveyor side of the holder 12, which is the insertion destination after the falling, is ON for a certain period of time, the specimen pushing into the holder 12 is started, and the rotation unit confirms that the specimen has fallen and performs processing of returning to the initial position. However, according to the above embodiment, in a case where the sensor S17 arranged between the turning mechanism 82 and the cylinder is changed ON → OFF, the turning mechanism 82 is operated to return to the initial position. Therefore, by returning the turning mechanism 82 to the initial position more quickly, it is possible to feed the next specimen, and it is possible to simultaneously process the time for pushing the specimen into the holder 12 and the time for feeding the next specimen into the rotation unit, and it is possible to improve the processing capability.

For example, the pushing operation can advance the processing of the next specimen as compared with the case where the pushing operation into the holder 12 is started after it is confirmed that the ninth sensor S19 is ON for a certain period of time.

The present invention is not limited to the above embodiments as they are. For example, the shape of the specimen container 11 is not limited to the above. The vertical direction can be determined as long as the inclination angle of the plate member in contact with the outer surface varies depending on the posture. For example, in addition to the shape in which the opening side gradually expands in the axial direction, even in a case where the flange of the opening portion has a larger diameter than the other flanges, the head side is inclined to be positioned higher, and thus, the vertical direction can be determined. Alternatively, it is also possible to determine the vertical direction in a case where the outer shapes of the opening side and the bottom side are different depending on the shape of the cap and the shape of the opening.

In addition, the reference value is provided, and the inclination is detected by the positive or negative of the difference from the reference value, but the present invention is not limited thereto, and can be appropriately changed according to the specification of the inclination sensor.

Note that the feeder 40 may be configured to perform feeding in two stages. For example, a plurality of housing boxes 41 as a housing portion forming a housing space capable of housing a plurality of specimen containers 11, a plurality of push-up plates 43 that move up and down in the housing box to push up the specimen containers 11 one by one, a plurality of drive sources such as air cylinders that move up and down the push-up plates 43, a plurality of auxiliary blocks 44 that move up and down in the vicinity of the push-up plates 43 to promote the movement of the specimen containers 11, and a plurality of drive sources such as air cylinder mechanisms that move up and down the auxiliary blocks 44 are provided. For example, two housing boxes 41 are arranged side by side in the front-rear direction, a discharge port 41b opened in the upper portion of the housing box 41 provided on the rear side communicates with a feed port 41a of the housing box 41 provided on the front side, and an opening and closing door 42 is provided in the discharge port 41b formed in the side portion of the housing box 41 on the front side. In this embodiment, first, the specimen container 11 is fed into the front housing box 41 from the rear housing box 41, and the specimen container 11 pushed upward in the front housing box 41 is supplied from the opening and closing door 42 to the specimen conveyance path AA.

Note that the present invention is not limited to the above-described embodiments as they are, and can be embodied by modifying the components without departing from the gist of the invention at the implementation stage. Each component exemplified in the above embodiment may be deleted, and the shape, structure, material, and the like of each component may be changed. Various inventions can be formed by appropriately combining a plurality of components disclosed in the above embodiment.

## Claims

1. A specimen processing apparatus, comprising:
a conveyor that conveys a specimen in a recumbent state along a predetermined conveyance path;
a detection apparatus including an inclination sensor that detects an outer shape of a specimen disposed at a detecting position of the conveyance path;
a feeder that feeds a specimen to a feed point on an upstream side of the detecting position in the conveyance path;
an uprighting apparatus that rotates and raises the specimen in a rotation direction based on a detection result of an outer shape of the specimen on a downstream side of the detecting position in the conveyance path;
a first regulating unit that is disposed between the detecting position and the feed point and regulates conveyance of the specimen; and
a controlling section that feeds a next specimen to the feed point by the feeder in a case where passing of the specimen is detected between the feed point and the detecting position.

2. The specimen processing apparatus according to claim 1, wherein
the inclination sensor is provided on a tilting member having a detection surface arranged to face an outer peripheral surface of the specimen,
a moving apparatus that supports the tilting member in an inclinable manner and moves the tilting member between a detecting position facing an outer surface of the specimen and a standby position retracted from the specimen is provided, and
the controlling section detects a posture of the specimen based on posture information detected during movement of the tilting member.

3. The specimen processing apparatus according to claim 2, wherein
the specimen is a specimen container having different outer diameters in the axial direction,
the tilting member is a plate-shaped member, and
the moving apparatus includes a support shaft connected to the plate-shaped member, a drive unit that reciprocates the support shaft, and a guide rail that guides a moving direction of the support shaft in a direction in which the support shaft comes into contact with or separates from a peripheral surface of the specimen container.

4. The specimen processing apparatus according to claim 3, wherein
the uprighting apparatus includes a holding mechanism configured to be able to hold and open the specimen in a recumbent state,
a tubular guide member is provided under the holding mechanism in an upright state, and
after the holding mechanism is turned to raise the specimen, the controlling section returns the posture of the holding mechanism to a recumbent state based on a detection result of a position sensor provided below the holding mechanism in an upright state and above the guide member.
